# EUROPEAN PATENT APPLICATION

(11) **EP 3 772 489 A1**
(43) Date of publication of application: **10.02.2021**
(21) Application number: 20189596.8
(22) Date of filing: 05.08.2020
(51) Int. Cl.: C02F 1/48, B01J 19/12

(54) **A METHOD OF RADIOFREQUENCY TREATMENT OF THE SUPRAMOLECULAR STRUCTURE OF MEDIA IN ORDER TO CHANGE THEIR THERMODYNAMIC AND ENERGETIC PROPERTIES, A MEDIUM OBTAINED BY THIS METHOD AND AN APPARATUS FOR CARRYING OUT THIS METHOD**

(30) Priority: 06.08.2019 SK 500362019
(71) Applicant: Némethová, Veronika, 94001 Nové Zámky (SK); Rázga, Filip, 90301 Senec (SK)
(72) Inventor: Némethová, Veronika, 94001 Nové Zámky (SK); Rázga, Filip, 90301 Senec (SK)
(74) Representative: Majlingová, Zuzana

(57) **Abstract**

An environmentally friendly and cost-effective method of radio frequency modification of the supramolecular structure of media is disclosed for changing of their thermodynamic and energetic properties. It is universally applicable technological method for the controlled modification of the supramolecular structure of liquid media for maximizing of their energetic benefits with minimal environmental and economic burden. The principle of the controlled modification of the supramolecular structure of liquid media is based on the intentional application of the defined radio frequency radiation changing the balanced thermal movement of the charged particles forming the supramolecular medium structure to oscillation movement, while the balanced interaction network is disturbed intentionally and the original supramolecular medium structure is remodeled and heat is releasing at the same time. Newly generated supramolecular structure is subsequently reflected by its obtained unique thermodynamic and energetic characteristics of the modified medium with surprising potential for energetic savings usable for industrial and biotechnological praxis. The invention relates also to the medium obtained by said method, as well as to the device for performing said method.

## Description

### Technical field

The present invention relates to the method of radio frequency modification of supramolecular structure of liquids, gases or their mixtures (hereafter together only as media). The invention relates also to the medium obtained by said method, as well as to the device for performing said method.

### Background Art

Vast majority of the methods applying the radio frequency radiation to the liquids and gases published until now solves particularly the problem of the clogging of conveying and distribution networks with incrusts and biofilms. It was described and verified that dedicated application of radio frequency radiation provably prevent the formation of scale, incrusts, corrosive and sedimentation deposits, and at the same time damaging also a wide spectrum of bacteria and microorganisms preventing the forming of so-called biosediments. Presently, such dedicated application of radio frequency waves is the standard and competes with the chemical modification of industrial media. Furthermore, the chemical modification is both cost-demanding and unfavorable for environment.

The solutions for the application of radio frequency radiation to the modified media significantly distinguished particularly by the method how the radio frequency waves are transferred to the media and by the purpose of their application. For example, a technological device disclosed in US 5326446 A (Binger, 1992) presents an apparatus for modification, purification, and decontamination of water by static and radio frequency electromagnetic pulses for its purification from mineral contaminants, bacteria, protozoa, algae, fungi, and other undesirable components. The apparatus is also designed for removing of the scale from pipes and containers containing water. Analogically, the invention disclosed in FR 2697537 A1 (Claude, 1992) describes liquid modification by electromagnetic induction directly focused to the prevention of salt crystalline and mineral incrusts, for prevention of the scale formation, corrosion or improvement of flocculation characteristics of the modified liquids maintaining their mineral content and clarity. Similarly, a method and an apparatus disclosed in US 5667677 A (Stefanini, 1994) applies the radio frequency signals to the liquid modification for the inhibition of the scale formation and slowing the distribution networks corrosion. More recent, but still analogical solutions for the prevention of scale formation, for the prevention of the pipe and boiler inner surfaces clogging, or for the inhibition of bacteria proliferation are described e.g. in US 20120217815 A1 (Clark, 2011) or WO 2015/184062 A1 (Suvorov, 2014). All above mentioned solutions, as well as their numerous analogues forming the prior art are technically directed to the solving of the problem of the clogging and bio-clogging of the devices through which liquids are passing, or in which they are present; i.e. they solve the problems unrelated to the present invention.

The modification of the media for increasing of their operation temperature is other application field for the radio frequency modification of the media. Among all available inventions the freely available solution disclosed in US 5306887 A (Smith, 1991) is characteristic for this application field, because it describes a general method for accelerating the heating of aqueous fluids by the application of radio frequency radiation treating the modified media. Such treating result in the heating of said median from the baseline temperature to higher temperature or from lower temperature to the desired one. From this point of view all other inventions can be considered to by analogous. It is important that in all above described technical and methodical solutions only defined construction variants designed for the solving of diametrically different problems - for the prevention of pipe clogging or medium heating - unrelated to the present solution. The principal differences reside in the fact that the prior solutions for the application of the defined radio frequency waves to the modified media do not solve the problem of the controlled modification of the supramolecular structure of media for favorable changes of their thermodynamic and energetic properties, while the present technical solution does.
The present invention presents environment-friendly and cost saving method for radio frequency modification of the supramolecular structure of liquids, gases or their mixtures (hereafter together only media) for favorable changes of their thermodynamic and energetic properties.

### Summary of the invention

The present invention describes a method for radio frequency modification of the supramolecular structure of media for changing of their thermodynamic and energetic properties, wherein the medium flowing at rate from 0.1 to 100 m³/h is subjected to the non-ionizing radio frequency radiation having frequency of 1 Hz to 300 GHz with strength of -30 to 40 dBm.

In the context of the present invention the term medium refers to a liquid, gas or their mixture. In the context of the present invention the term liquid refers to any substance being in liquid state. The term liquid also equivalently refers both to the liquids of Newton type (i.e. those for which the Newton Law of viscosity applies, e.g. Water) and to the liquids of non-Newton type (e.g. milk, starch solution, polymer solutions). From the view of the present invention application the term liquid comprises also polar or ion liquids, as well as their solutions containing admixtures, such as soluble or insoluble substances, ions, charged or neutral particles, nanoparticles, submicroparticles, microparticles, polymers, macromolecules, microorganisms, bacteria, cyanobacteria, algae, fungi, etc. The term liquid refers also to emulsions and colloid solutions irrespective their stability (i.e. both stable and instable colloids). Equally, the term liquid comprises also the mixtures of liquids formed by the combination of mutually miscible, partially miscible or non-miscible liquids, as well as liquids formed by arbitrary combination of the above-mentioned subsets irrespective their chemical composition or content of the admixtures. The term liquid comprises also the solutions of polyanions, polycations, and charged or neutral macromolecules. In the context of the industrial media the term liquid comprises also any process medium in liquid state irrespective its chemical composition. For example, in case of water, it can be distilled, deionized, ultrapure, demineralized, redistilled, soft, hard, drinking, mineral, industrial, non-potable, supplying, waste, surface, rainfall, groundwater, sea, turbid, dirty water, etc. i.e. water in all its variants. Similar analogy applies also to other industrially usable media, e.g. alcohols. In the context of the present invention the term gas refers to any substance in gaseous state. The same analogy relating to the liquid composition is applied also to this term. The term mixture refers to any combination of liquids and gases as defined above.

In the context of the present invention the term radio frequency modification is defined as the application of non-ionizing radiation having frequency higher than 1 Hz and lower than 300 GHz. The term non-ionizing radiation refers to the radiation, which energy is not sufficient for removing or extracting of an electron from the electron shell of an atom or molecule, i.e. it is not able to ionize neither atoms, nor molecules. As regards the present invention it is therefore the intentional application of harmless radiation.

In the context of the present invention the term supramolecular structure refers to the permanent interaction network formed by the medium molecules together with admixtures such as dissociation ions, particles carrying electrostatic charge or electric dipole, soluble and insoluble substances, charged and neutral particles, nanoparticles, submicron particles, microparticles, etc., mutually connected by the system of solvation envelops, electrostatic interactions, hydrogen bonds, and van der Waals' interactions (induced dipole interactions or dipole-dipole interactions) to bigger interaction units (Razga, 2002). Since the kinetic energy of medium particles is low in comparison with their potential energy, the medium particles are kept in their balanced positions, while the organization of said particles defines the supramolecular medium structure in the space. Such organized supramolecular medium structure is reflected by its well-known physical and chemical, thermodynamic, and energetic properties. The present invention intentionally modifies the balanced arrangement of the media molecules forming its supramolecular structure, in order to induce its reorganization consequently resulting in new, obtained thermodynamic and energetic characteristics of the medium.

The thermodynamic and energetic medium properties influenced by the present invention includes e. g.: inner energy (U), heat clearance coefficient (γ), compressibility coefficient (γ), thermal capacity at steady volume (Cᵥ), thermal capacity at steady pressure (Cₚ), specific thermal capacity (C/m), molar thermal capacity (Cₘ), enthalpy (H), enthalpy of phase transition (ΔₜᵣₛH), inner pressure (π_{τ}), isothermal compressibility (κ_{τ}), Joul-Thompson coefficient (µ), entropy (S), phase transition entropy (ΔₜᵣₛS), Helmholtz energy (A), Gibbs energy (G), molar Helmholtz energy (Aₘ), molar Gibbs energy (Gₘ), fugacity (f), chemical potential (µ), phase transition temperature (Tₜᵣₛ), and the properties derived therefrom. In the context of the present invention the change of properties is considered to be a change of at least 2.5 %. The medium change resulting from temperature change is not considered to be the change of the properties.

In summary the application of the present invention results in the intentional change of the supramolecular structure of the modified medium. Such change can or cannot be accompanied by heat releasing. This remodeled supramolecular structure is reflected by new unique thermodynamic and energetic properties of the modified medium in the form of the changed specific thermal capacity, evaporation enthalpy, boiling point, melting enthalpy, melting point, phase transition point, etc.

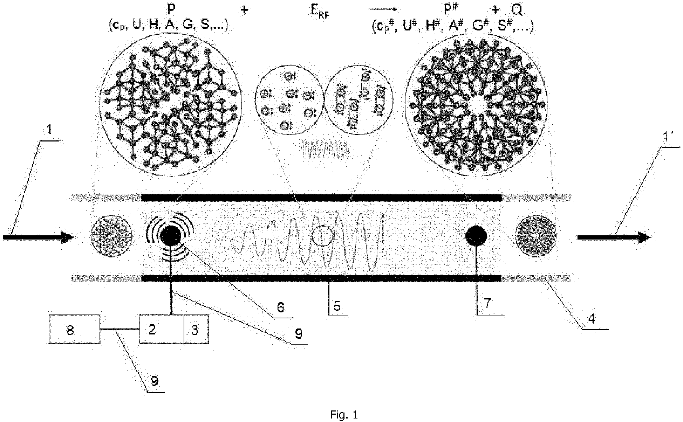

In detail, the modified medium flows through the distribution pipeline (in open or closed distribution system); depending on the flowing character (laminar or turbulent), its flowing rate, and pipeline size, it is exposed to the effect of the generated radio frequency radiation for defined time. Said radiation remodels its supramolecular structure by its oscillation character. In natural, non-modified status, the supramolecular medium structure is reflected by its well-known physical and chemical, thermodynamic, and energetic characteristics corresponding to the balanced state at given ambient conditions. The controlled application of radio frequency radiation having defined frequency, strength, and time profile results in the intentional change of the moving of the charged particles forming the supramolecular medium structure from random, balanced thermal moving to controlled, oscillation moving, while the balance interaction network is intentionally disturbed and the original supramolecular medium structure is remodeled (figure 1). Newly generated supramolecular structure of the modified medium is subsequently reflected by its obtained unique thermodynamic and energetic characteristics with surprising potential for energetic savings usable for industrial and biotechnological praxis.

In the context of the present invention the power supply of the generator of the non-ionizing radio frequency radiation of ≤ 24 V is considered to be preferred. It enables its economic effectives and environmental carefulness.

In the context of the present radio frequency modification the application of the radio frequency radiation (continual or pulse - with duration of individual pulse at least 0.1 s and interval between individual pulses in the range of 0.1 to 3600 s) is preferably in the range of 1kHz - 6 GHz, more preferably in the range of 1 MHz - 2.4 GHz, which radiation influences not only the supramolecular medium structure, but also the interaction characteristics of contaminants present in the modified medium or in the distribution network. In the most preferred embodiment, the intentional change of the supramolecular media is performed by the application of radio frequency radiation in range of 100 MHz - 1 GHz. For the control of radio frequency radiation influence to the modified medium it can be preferred to modulate time profile of the frequency and strength for ensuring multigrade consecutive modification of the processed medium. From the effectiveness point of view the application of the radio frequency radiation having strength in the range of -30 to 40 dBm is considered to be preferred.

For maximizing the application of the radio frequency radiation to the supramolecular medium structure it is preferred, when the generated radiation is emitted directly to the flowing medium. Thus, maximal possible space reach of the applied radio frequency waves to the processed medium in the view of their mutual interaction is ensured. Since the duration and rate of mutual interaction between applied radio frequency radiation and modified medium determines the achievement of the desired change of its supramolecular structure and thus the change of its thermodynamic and energetic characteristics, it is advantageous to modify the medium repeatedly (closed system) and the medium flow is turbulent. Both preferred aspects of the present invention extend the time of medium exposition to the radio frequency radiation.

In summary, changes of thermodynamic and energetic characteristics of the modified media based on the controlled modification of its supramolecular structure by the application of the radio frequency radiation, together with minimal ecologic and economic burden of the disclosed modification process (power consumption ≤ 24V) represent the integral part of the present invention.

Furthermore, the described invention relates also to the medium obtained by the method of the invention. By the disclosed modification method, the processed medium obtains new thermodynamic and energetic properties usable in the industrial praxis, particularly in heat or cooling distribution systems. For such distribution systems it is preferred to have water or water vapor as obtained modified medium. The medium modified by the present method can be subjected to the phase transition, i.e. state change step, resulting in the transfer of its new properties to the former state. In case of water, the transmission of the properties to water vapor or ice or snow is preferred. Thanks to the change of the supramolecular medium structure and resulting changes of its thermodynamic and energetic properties it is possible to intentionally change e.g. energetic burden of the individual phase transitions bringing unexpected potential of energetic savings for broad scope of the applications.

Furthermore, the present invention relates also to an apparatus for the modification of the supramolecular media structure for intentional change of their thermodynamic and energetic properties, comprising:
- a pipeline medium flowing equipped with a shield against the electromagnetic waves,
- a programmable generator of radio frequency radiation,
- a transmitting areal connected to the generator of radio frequency radiation, and positioned in the pipeline,

The apparatus by which the intentional modification of the supramolecular media structure is ensured for changing of their thermodynamic and energetic properties, principally consists of a power supply, programmable generator of radio frequency radiation, enhancer, cabling, aerial, pipeline, metal insert and wave absorber, while the spacial arrangement of the individual parts is fully adjustable considering the final application and spacial conditions.

The environment-friendly and cost saving method of the disclosed radio frequency modification of supramolecular media structure is provided with the power supply of ≤ 24 V using direct current in its preferred arrangement and parts selection. Said power supply, however, does not limit the present method of medium modification in any way, and it is possible to use also other input voltage (e.g. 220 V) and alternating current.

The radio frequency radiation applied for the purpose of supramolecular medium structure modification is generated by the programmable generator enabling generating of the radio frequency signals at the frequency range of Hz - GHz, with strength of 40 dBm and programmable time and pulse profile. The generator is neither defined, nor limited by the described technical parameters and it construction embodiment and possibilities are based on the current state of art. From the application point of view the generator has to provide defined radio frequency radiation, while its resulting character is not limited by the generation of one frequency (Hz, dBm), but it can consist of the combination of more defined frequencies, as well as time sequence of multiple different frequencies defined by various parameters of Hz and dBm. Equally, it is possible to apply sequence pulses of the define oscillation profiles, either in time constant regime, or in time variable regime. In the preferred arrangement the generator is supplied with ≤ 24 using direct current; however, it is not limited by this method of power supply in any way. In the preferred arrangement the generator can be connected to the enhancer of the generated waves helping to generate radio frequency radiation of required strength dBm. The enhancer can have independent power supply with ≤ 24 V, or a power suppl in the form of the integral part of the generator.

The generator of radio frequency radiation (with or without the enhancer) is connected to the transmitting aerial screened off by the cabling; in the preferred arrangement through coaxial cable minimizing loss of generated signal. The transmitting aerial can be connected to the generator also directly, i.e. without the cabling.
In the context of the present invention the aerial is the part of the apparatus transforming modulated high frequency signal to the radio frequency radiation emitted to the space. It is made from metal, preferably from copper, while in the preferred arrangement it is not in direct contact with the processed medium and it is separated from it by non-conductive material enabling passing of the generated radiation, e. g. glass or plastic. In such arrangement the aerial does not behaves as an electrode (there is no contact with electrolyte). Furthermore, no contaminant clogging occurs and thus its performance is maximized.

In the preferred arrangement the transmitting aerial is bringing to the flow of the processed media by a bypass intentionally connected to the distribution network. The body of the bypass is formed by plastic fitting and pipeline preferably made from material PP-R (statistic polypropylene). The individual components of the bypass, however, are not limited to the using of PP-R pipes and armatures in any way. They can be made of various available plastic, composite, or other metal parts for liquids and gases distribution, or any combination thereof; however, always in relation the giving medium flow and pressure.

In preferred arrangement the pipeline element of the apparatus has the inner diameter in the range of 1 - 20 cm, thus defining the effective space reach of the applied radio frequency radiation.

The transmitting aerial can also be immersed directly to the distribution network, if its character enables it.

As regards the effectiveness of the present invention, the pipeline element of the apparatus is, in its preferred embodiment, filled with the metal insert representing the location of the concentrated effect of the applied radio frequency radiation to the supramolecular structure of the modified medium. At the same time the metal insert works as a conductor and reflector of the generated waves, condenser of the generated charges, and shield of the applied radiation. Thus, the metal insert defines the space of the controlled effect of the radio frequency radiation to the supramolecular medium structure, and therefore it is made of a conductive material, preferably metal, preferably iron, while forming a continual inner coat of the plastic pipeline. In case of the metal embodiment of the pipeline element of the apparatus, the metal insert is absent. As regards the screening of the apparatus, it is not limited merely to the using of metal insert or metal pipeline element, but it can be multi-layered. The multi-layered screening minimizes probability of the emission of the generated radio frequency radiation the space out of the apparatus.

A preferred apparatus arrangement can comprise also a means for absorbing of the electromagnetic waves. This means is positioned in the pipeline element of the apparatus and prevents, or rather minimizes the spreading of uncontrolled waves of the pipeline space, in order to prevent undesired cross-interference of the applied radiation and supramolecular structure of the processed medium. At the same time it, synergically with the metal insert effect, minimizes the emission of the applied radiation away from the apparatus. For this reason, its construction is made by coarse-grain mixture of conductive elements, preferably having metal nature separated by non-conductive material, e.g. glass or plastic. Analogically, as in case of aerial, such arrangement prevents the contact with electrolyte, and the means for absorption of wave does not behave as an electrode. The wave absorption means can also be immersed directly to the distribution network, if its character enables it.

For final application of the controlled radio frequency modification of the supramolecular medium structure, as well as in relation of the space disposition of said modification method application, all above described elements, i. e. power supply, generator, enhancement, cabling, aerial, pipeline, metal insert, and wave absorber, are scalable from construction and size point of view, while the character of the used materials is fully dependent on the final application, and can vary in dependence on the application type, such as industrial, waterworks, biotechnological, petrochemical and other.

The solution disclosed in this invention can be considered to be universally applicable technological process for defined modification of thermodynamic and energetic media characteristics.

The application of the present invention in the energetic industry can be principally demonstrated on heating circulation systems with direct focus on cost reduction for heat production and distribution in the form of fuel and emission savings. In this field the present invention significantly minimizes the economic costs and environmental burden representing a new generation of ecologic-technology process for the controlled modification of the supramolecular media structure for desired favorable changes in their thermodynamic and energetic properties. The below described examples (***Examples 1-9***; Table) relate to the application of the present invention for the modification of thermodynamic and energetic properties of water and water media. They are not, however, not limited to such media in any way. Since the present invention is applicable universally, it is not limited to energetic field in any way.

### Brief description of the drawings

Figure 1 schematically illustrates the working principle of the present invention.
Figure 2 illustrates the graph presenting time dependency of Hg-drop life span in water via PO-method.
Figure 3 demonstrate difference in water evaporation enthalpy before and after medium modification according to the invention. Data was obtained by differential scanning calorimetry (DSC).

### Examples of Invention Embodiment

Figure 1 illustrates the working principle of the present invention. The modified medium 1, characterized by the original supramolecular structure reflected by its original balanced thermodynamic and energetic characteristics **P** (cₚ, U, H, A, G, S, ...), flows through pipeline 4 having diameter **Φ** defined by the flow **Ṽ** and flowing rate **v,** wherein this medium 1 is exposed to the defined radio frequency radiation (Hz, dBm, t) generated by the generator 2, enhanced by the enhancer 3, and emitted by the transmitting aerial 6 placed in the pipeline 4. The supply 8, generator 2, and transmitting aerial 6 are connected by cabling 9. Power supply 8 of generator 2 is ≤ 24V. The pipeline 4 is screened off by shield 5 against the electromagnetic radiation in the form of metal insert. By the controlled application of the radio frequency radiation having total energy of **E_{RF}** the movement of the charged particles forming the supramolecular media structure is intentionally changing from the balanced thermal movement to the oscillation movement resulting in the controlled disturbance of the balanced interaction network and remodeling of the original supramolecular medium structure **P** → **P^{#}** simultaneously releasing heat **Q.** P+E_{RF}→P^{#}+Q. Newly obtained supramolecular structure of the modified media 1' is reflected by its obtained thermodynamic and energetic properties **P^{#}** (cₚ^{#}, U^{#}, H^{#}, A^{#}, G^{#}, S^{#}, ...). Redundant radiation is absorbed by the means 7 for the absorption of the electromagnetic waves positioned in the pipeline 4.

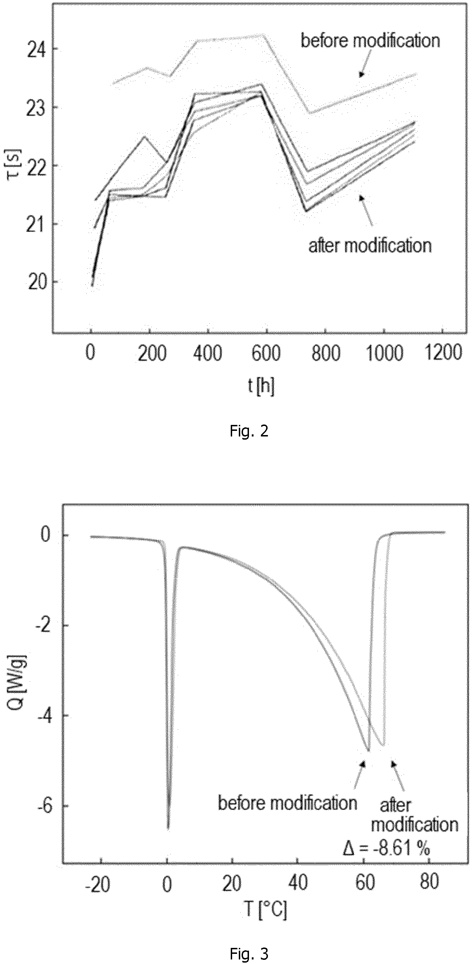

Figure 2 demonstrates the remodeling of the supramolecular structure of medium 1 by the application of the defined radio frequency radiation (Table 1; column 3: evaporation enthalpy change). Data was obtained by PO-method (SK 279429 B6) enabling the detection of supramolecular structure change, *inter alia* via a parameter τ - life span of Hg-drop in medium. The graph shows the change of the supramolecular modified water structure (multiplicity record), where the lifespan of Hg-drop in water after its modification by the method of the invention is significantly shorter in each time of measurement. Lower value τ indicates that Hg-drop overtakes lower resistance during its growing period in the modified medium, i. e. the supramolecular structure is less compact in comparison with the non-modified medium. This remodeling is subsequently reflected by a heat quantity needed for liquid - gas phase transition, as demonstrated on figure 3 showing determination of evaporation water enthalpy by differential scanning calorimetry (DSC) method. **Q** - normalized heat flow; **T** - temperature.

### Example 1. Controlled modification of medium 1 thermal capacity by the application of the method according to the invention.

The present method of the radio frequency medium modification, where their supramolecular structure, i. e. the permanent interaction network formed by all particles contained therein, is changed by the controlled way, is applied for increasing the thermal capacity of the processed medium. This induced change is obtained by the application of the radio frequency radiation having frequency of ∼ 250-350 MHz with strength of ∼ 10-20 dBm to the medium flowing with the flowing rate of ∼ 1-6 m³/h, where the forced remodeling of the supramolecular medium structure is expressed as ∼ 10% increase of its thermal capacity. As shown on Figure 1 the change of the supramolecular structure of the processed medium induced by the radio frequency radiation is connected with heat release and subsequently absorbed by the medium. Thus, for heating it is not necessary to supply thermal energy externally, because the part of it is already kept in the medium by the process of the remodeling of its supramolecular structure. Furthermore, the medium having higher thermal capacity flowing in the closed system is able to achieve higher heat amount, and thus fundamentally increases heat amount transferred by the system at the constant pump performance. The increase of the thermal capacity of the modified medium fundamentally increases the performance of the distribution system, because for the increase of the processed medium temperature lower supplied energy amount suffices, and at the same time there are significant savings of electric energy, because the pumps are able to transfer more heat during given time unit and at the given power. And all at the power supply of ≤ 24 V. Proportion of the change of the processed medium thermal capacity is adjustable by parameters of the applied radio frequency radiation, as well as by the medium flow and its flowing rate.

***Example 2*.** Analogically as in ***Example 1*** the increased thermal capacity of the processed medium can be effectively used also for cooling systems, because it is possible to control amount of released heat during the process of remodeling of its supramolecular structure by the application of suitable radio frequency radiation (dBm ≤ 0). In this case the generated and subsequently absorbed heat quantity is minimal. Increase thermal capacity of the medium is therefore directly reflected by the heat amount needed to by supplied, in order to heat the medium by 1 Kelvin. In other words, the standard heat amount absorbed by the cooling system does not suffice for its undesired warming and thus resulting in significant decrease of costs for maintaining desired processing temperature.

Analogically to ***Examples 1*** and ***2*** are in shorter form described in ***Examples 3-5.***

### Example 3. Controlled modification of media evaporative enthalpy by the application of the present invention.

Application of the present method of radio frequency modification of the supramolecular medium structure (Figure 2) enables intentional reduction of the processed media evaporation enthalpy by ∼ 10 % (Figure 3), resulting in direct savings of energy needed for liquid-gas phase transition. In other words, quantity of energy needed for transition of medium from liquid state to gaseous state is significantly lower and it also directly results in lower fuel consumption and lower emission generation.

### Example 4. Controlled modification of media solidification enthalpy by the application of the present invention.

Application of the present method of radio frequency modification of the supramolecular medium structure enables intentional reduction of the media solidification enthalpy by ∼ 3 %, resulting in direct savings of energy needed for liquid-solid phase transition.

### Example 5. The controlled modification of thermodynamic and energetic properties of solid and gas substances by the application of the present invention.

The obtained thermodynamic and energetic media properties in the liquid state resulting from the remodeling of their supramolecular structure can be transformed to properties of solid (e. G. ice, snow) or gas substances (vapor) derived therefrom. Thus it is possible to increase heating value of the formed gas or thermal resistance of the produced ice or snow. This principle can be applied to any phase transitions of the modified media.

### Example 6. Controlled modification of the rate constants of chemical and polymerization reaction by the application of the present invention.

The present method for radio frequency modification of media supramolecular structure enables controlled management of kinetics and effectiveness of the chemical reactions, which rates and effectiveness directly depend on the structural characteristics of the used solution (i. e. medium). The spacial arrangement of the solution molecules, composition of the solution, interaction and supramolecular structure of the solution directly influence the energetic background of reaction coordinates, lifetime and stability of intermediates, reaction energetic barriers, products productions, equilibrium constants, Arhenio parameters, etc., having direct impact on the resulting rate constants for the chemical processes. The controlled modification of the kinetic parameters of chemical reactions by the controlled modification of medium supramolecular structure and its energetic and thermodynamic characteristics represents surprisingly significant tool for minimization of environmental, energetic, and economic burden of the given processes in global range.

### Example 7. Controlled modification of the complexion characteristics of polyelectrolytes complexes by the application of the present invention.

The intentional change of the supramolecular structure of the solution of polyanions, polycations, or charged or neutral macromolecules, which fundamentally change their properties, enabling the management of kinetics and thermodynamics of the complexion reactions, analogically to ***Example 6.*** Furthermore, the present invention enables controlled modification of high viscosity properties of the solutions. In combination with the released heat additively influencing these properties, it has the direct influence to the reduction of the amortization of the process elements, such as pumps, electro-motors, jets, and etc. Considering the controlled change of high elasticity properties of the solutions resulting from the intentional change of their supramolecular structure, it is also possible to technologically process solutions, which can be presently processed only in limited extend without their modification.

### Example 8. Control of nucleation centers formation by the application of the present invention.

The present method for the radio frequency modification of the supramolecular media structure enables changing of the supramolecular medium structure and its interaction characteristics by the remodeling and thus controlling the rate of the formation of the nucleation centers of the phase transfers or non-soluble complexes. The control of production or growing of the nucleation centers of usually undesired complexes and clots represents the enormous reduction of the costs connected with their subsequent removing. Energetic aspect of the savings due to the control of the nucleation centers of the phase transitions is suggested in ***Examples 3*** and ***4***.

### Example 9. Reducing of energetic costs for electrolytic processes.

Disclosed method for the radio frequency modification of the supramolecular medium structure, when the interaction network is intentionally remodeled, modifies the mutual intermolecular interactions, i. e. Electrostatic interactions, hydrogen bonds, and van der Waals interactions, including the restructuralization of the solvation envelops of the individual molecules. The disclosed modification method directly results in the energetic savings relating of decomposition and electrolytic processes.

In summary, the present method for the modification of the supramolecular medium structure undoubtedly directly impacts and positively influences the effectiveness of open, semi-open, and closed circulation systems in industry and technologies using liquid media, wherein minimal energetic demands for the modification of their supramolecular structure (≤ 24 V) and its environmental friendliness can be considered to be the main benefit. The modification of media by the present method significantly reduces the amortization of the process elements, such as pumps or electro-motors, reduces the electric energy, heat and coldness production and distribution costs, improves delivering and taking of liquid and gas energy, reduces electrolysis costs, increases effectiveness and lifespan of heating and cooling systems, etc. However, it is necessary to note that the described change of the supramolecular structure of the processed medium is not permanent and it is characterized by its relaxing time, within which the supramolecular structure of the modified media came back to the original, thermodynamically balanced state with minimum of energetic benefits. Therefore, for the maximizing of energetic benefits it is necessary to subject the medium to repeated or continual treatment with the defined radio frequency radiation; ideally in the closed flowing system, where the steady state characterized by the obtained thermodynamic or energetic properties are achieved after some time. In another case the thermodynamic and energetic benefits of the present invention application are time-limited.

### Example 10

Table 1 lists data showing change of the individual thermodynamic and energetic media quantities modified by the method of invention.

**Table 1:**

| **Medium** | water | water | water | water | water | water | water | water | water | water |
|---|---|---|---|---|---|---|---|---|---|---|
| **Pipeline diameter [mm]** | 51.4 | 51.4 | 102.2 | 90.0 | 51.4 | 51.4 | 51.4 | 90.0 | 51.4 | 51.4 |
| **Flowing rate [m³/h]** | 5 | 5 | 20 | 35 | 6 | 5 | 5 | 35 | 5 | 6 |
| **Generator supply [V]** | 12 | 12 | 12 | 12 | 12 | 15 | 15 | 24 | 24 | 24 |
| **Radiation frequency [MHz]** | 315 | 285 | 315 | 433 | 300 | 520 | 868 | 915 | 2400 | 4400 |
| **Radiation strength [dBm]** | 22 | 0 | 24 | 28 | 18 | 28 | 12 | 33 | 0 | 8 |
| **Expositio n time [h]** | >24 | >24 | >24 | >24 | >24 | >24 | >24 | >24 | >24 | >24 |
| **Quantity** | Therma l capacit y | Therma l capacit y | Evaporatio n enthalpy | Evaporatio n enthalpy | Solidificatio n enthalpy | Therma l capacit y | Therma l capacit y | Evaporatio n enthalpy | Therma l capacit y | Therma l capacit y |
| **Δ [%]** | +9.98 | +3.81 | -8.61 | -17.21 | -3.07 | +13.21 | +6.03 | -19.44 | +4.17 | +11.88 |

| | | | | | | | | | | |
|---|---|---|---|---|---|---|---|---|---|---|
| Δ - perceptual difference in values of the measured quantity between the modified and non-modified mediums at identical determination conditions | | | | | | | | | | |

### List of the reference signs:

1 - medium
1' - modified medium
2 - generator of radio frequency signal
3 - EM waves enhancer
4 - pipeline
5 - EM waves shield
6 - transmitting aerial
7 - means for absorbing of EM waves
8 - power supply
9 - cabling
P - supramolecular structure of medium in its balanced state - steady state thermodynamic and energetic characteristics
P^{#} - supramolecular structure of the modified media - changed thermodynamic and energetic characteristics in comparison with the steady state
E_{RF} - radio frequency radiation energy
Q - released heat

## Claims

1. A method for radio frequency modification of the supramolecular structure of media for changing of their thermodynamic and energetic properties, **characterized in that** a medium (1) flowing at rate from 0.1 to 100 m³/h is subjected to a non-ionizing radio frequency radiation having frequency of 1 Hz to 300 GHz with strength of -30 to 40 dBm.

2. The method according to claim 1, **characterized in that** it is performed at power supply of ≤ 24 V.

3. The method according to claim 1 or 2, **characterized in that** a frequency of the radio frequency radiation is in the range of 1 kHz to 6 GHz, preferably 1 MHz to 2,4 GHz, more preferably 100 MHz to 1 GHz.

4. The method according to any of preceding claims, **characterized in that** the medium (1) is flowing turbulently or in a laminar way.

5. The method according to any of preceding claims, **characterized in that** the non-ionizing radio frequency radiation is continual or pulsed with a duration of individual pulse at least 0.1 s, and an interval between individual pulses in the range of 0.1 - 3600 s, and is optionally modulated.

6. The method according to any of preceding claims, **characterized in that** the non-ionizing radiation is emitted directly to the flow of the flowing medium.

7. The method according to any of preceding claims, characterized that the modified medium (1') is subjected to the change of state subsequently.

8. A modified medium obtained by the method according any of preceding claims 1 to 7.

9. The modified medium according to claim 8, **characterized in that** it is modified medium (1') selected from water, water vapor, ice, alcohol.

10. An apparatus for modification of media supramolecular structure for changing of their thermodynamic and energetic properties, **characterized in that** it comprises:
- a pipeline (4) for flowing of a medium (1) equipped with a shield (5) against electromagnetic waves,
- a programmable generator (2) of radio frequency radiation,
- a transmitting areal (6) connected to the generator (2) of radio frequency radiation, and positioned in the pipeline (4),
- and, optionally an enhancer (3) of electromagnetic waves connected to the generator (2) of the radio frequency radiation or being a part of it,
- and optionally means (7) for absorbing of the electromagnetic waves positioned in the pipeline (4).

11. The apparatus according to claim 10, **characterized in that** the means (7) for absorbing of the electromagnetic waves are a coarse-grained mixture of elements conducting electricity separated from the flowing media by a non-conductive material, which non-conductive material being preferably glass, plastic or their mixture.

12. The apparatus according to claim 10 or 11, **characterized in that** the shield (5) against the electromagnetic waves is in the form of metal insert forming the inner coat of the pipeline (4).

13. The apparatus according to any of claims 10 to 12, **characterized in that** the shield (5) against the electromagnetic waves is multi-layered.

14. The apparatus according to any of claims 10 to 13, **characterized in that** the transmitting areal (6) is equipped with a cover of non-conductive material for preventing contact of the areal with the flowing media.

15. Use of the modified media according to claims 8 or 9 in a heat distributing system, wherein the modified medium (1') is water or water vapor, or in the cooling system, where the modified medium (1') is water.
